Europäisches Patentamt

European Patent Office

Office européen des brevets

(11) Veröffentlichungsnummer: **0 216 278 B1**

(12) **EUROPÄISCHE PATENTSCHRIFT**

(45) Veröffentlichungstag der Patentschrift: **04.03.92**

(21) Anmeldenummer: **86112677.9**

(22) Anmeldetag: **13.09.86**

(51) Int. Cl.⁵: **C01B 33/18**, B01J 20/10, B01D 15/08, C07K 3/20

(54) **Kugelförmige Kieselsäure-Partikel.**

(30) Priorität: **25.09.85 DE 3534143**
**14.05.86 DE 3616133**

(43) Veröffentlichungstag der Anmeldung:
**01.04.87 Patentblatt 87/14**

(45) Bekanntmachung des Hinweises auf die
Patenterteilung:
**04.03.92 Patentblatt 92/10**

(84) Benannte Vertragsstaaten:
**BE CH DE FR GB IT LI NL SE**

(56) Entgegenhaltungen:

**CHEMICAL ABSTRACTS, Band 88, Nr. 18, 1.
Mai 1978, Seite 120, Zusammenfassung Nr.
123337q, Columbus, Ohio, US; & JP-A-77 138
091 (NATIONAL INSTITUTE FOR RESEARCH
IN INORGANIC MATERIALS) 17-11-1977**

**JOURNAL OF COLLOID AND INTERFACE
SCIENCE, Band 26, 1968, Seiten 62-69, New
York, US; W. STÖBER et al.: "Controlled
growth of monodisperse silica spheres in
the micron size range"**

**JOURNAL OF COLLOID AND INTERFACE
SCIENCE, Band 30, Nr. 4, August 1969, Seiten
568-573, New York, US; H. FLACHSBART et
al.: "Preparation of radioactively labeled monodisperse silica spheres of colloidal size"**

**Kohlrausch,"Praktische Physik",Band 1, S.
31-32**

**Brockhaus, Band 18, S.9**

(73) Patentinhaber: **MERCK PATENT GESELL-
SCHAFT MIT BESCHRÄNKTER HAFTUNG
Frankturter Strasse 250 Postfach 4119
W-6100 Darmstadt(DE)**

(72) Erfinder: **Unger, Klaus, Prof. Dr.
Am Alten Berg
W-6104 Seeheim-Jugenheim(DE)**
Erfinder: **Giesche, Herbert
Gartenstrasse 3
W-6501 Klein-Winternheim(DE)**
Erfinder: **Kinkel, Joachim, Dr.
Waldhilbersheimer Strasse 4
W-6531 Guldental(DE)**

EP 0 216 278 B1

**Beschreibung**

Die Erfindung betrifft ein Verfahren zur Herstellung von hoch monodispersen, unporösen kugelförmigen $SiO_2$ Partikeln sowie diese Partikel.

Sphärische $SiO_2$-Teilchen genießen besonderes Interesse als wertvolle Hilfsmittel im technisch-wissenschaftlichem Bereich sowie als interessante, wissenschaftliche Studienobjekte. Ein wesentliches Anwendungsgebiet derartiger Teilchen, insbesondere wenn diese von definierter und einheitlicher Größe sind, vornehmlich im nm- und $\mu$m-Bereich, ist ihre Verwendung in der Normung, beispielsweise als Kalibrierungsstandards zur Größenbestimmung kleiner Objekte wie Staubpartikel oder Zellen. Als weiteres Anwendungsgebiet kommt die Verwendung als Sorptions- bzw. Trägermaterial auf dem Feld der Chromatographie und den davon abgeleiteten Trenntechniken in Betracht. Bei allen derartigen Anwendungen spielen Teilchengröße und Teilchengrößenverteilung eine erhebliche Rolle, so daß es wichtig ist, derartige Teilchen in Bezug auf diese Charakteristika in vorherbestimmbarer reproduzierbarer Weise erzeugen zu können.

Aus dem Stand der Technik ist bekannt, daß sich kugelförmige $SiO_2$-Partikel durch hydrolytische Polykondensation von Tetraalkoxysilanen erhalten lassen, beispielsweise aus den Publikationen von W. STÖBER et al. in J. Colloid and Interface Science 26, 62 (1968) und 30, 568 (1969) sowie dem US Patent 3,634,588, denen die grundlegenden Reaktionsbedingungen hierfür zu entnehmen sind. Diese sehen vor, daß Tetraalkoxysilan in einen Überschuß eines wäßrig-alkoholisch-ammoniakalischen Hydrolysegemisches gebracht wird, wobei durch geeignete Maßnahmen wie Rühren, Schütteln oder Ultraschallbehandlung für eine intensive Durchmischung gesorgt wird. Hierbei lassen sich je nach Wahl der konkreten experimentellen Parameter $SiO_2$-Partikel unterschiedlicher mittlerer Teilchengröße und variierender Teilchengrößenverteilung erhalten. Gemäß den Angaben der zitierten Publikationen wurden $SiO_2$-Partikel mit mittleren Teilchengrößen zwischen 0,05 und 2 $\mu$m (in einzelnen Fällen bis zu ca. 3 $\mu$m) erhalten, wobei der Einfluß verschiedener Kieselsäureester, von Ammoniak- und Wasserkonzentration sowie von verschiedenen Alkoholen im Hydrolysegemisch untersucht wurden. Den Ergebnissen, die sich in eigenen Untersuchungen bestätigen ließen, ist zu entnehmen, daß die Erzielung von monodispersen sphärischen Teilchen nur in Teilchengrößenbereich bis etwa 2 $\mu$m einigermaßen möglich ist, wobei sich allerdings die Reproduzierbarkeit noch nicht ausreichend beherrschen läßt. So liegen die Standardabweichungen für die Teilchendurchmesser meist zwischen etwa 5 und 15 %. In einzelnen Fällen wurden Standardabweichungen bis zu 50 % festgestellt. Die Herstellung monodisperser Teilchen größerer Durchmesser gelang nicht; die Herstellung von Teilchen mit Durchmessern über 3 $\mu$m ist nicht beschrieben. Gemäß den zitierten Publikationen wurden die Teilchen nur in Form ihrer Hydrosole hergestellt und charakterisiert, jedoch nicht als Partikel an sich isoliert.

Dementsprechend fehlen jegliche Angaben über ihre weiteren Eigenschaften, insbesondere ihre Porosität.

In eigenen Untersuchungen an $SiO_2$-Partikeln, die nach dem Verfahren von STÖBER et al. hergestellt und anschließend durch Sedimentation oder Zentrifugation und Trocknung isoliert wurden, zeigte sich, daß derartige Teilchen eine deutliche Mikroporosität aufweisen. Diese manifestiert sich in der beispielsweise durch Gasadsorption meßbaren spezifischen Oberfläche (etwa nach der BET-Methode), die je nach den gegebenen Versuchsbedingungen um den Faktor 10-100 über der theoretisch errechenbaren Oberfläche liegt.

Die Mikroporosität der Teilchen beeinflußt naturgemäß sehr wesentlich deren Eigenschaften. Für viele der vorgenannten Anwendungszwecke wird es aber als vorteilhaft angesehen, wenn die Teilchen praktisch keinerlei Porosität, also eine völlig geschlossene Oberfläche, aufweisen.

Der vorliegenden Erfindung lag somit die Aufgabe zugrunde, kugelförmige $SiO_2$-Partikel zugänglich zu machen, die möglichst keiner Porosität aufweisen und darüber hinaus eine hohe Monodispersität zeigen. Die Herstellung sollte möglichst einfach durchführbar sein und Teilchen mit vorherbestimmbarer, reproduzierbarer Größe, möglichst auch bis zu Teilchendurchmessern von 10 $\mu$m liefern können. Weiterhin sollte auch eine Modifikation derartiger Teilchen möglich sein dahingehend, daß diese in der $SiO_2$-Matrix eingelagerte organische Gruppen enthalten, wie sie etwa zur Modifizierung von Kieselgelen normalerweise dienen.

Überraschend wurde nun gefunden, daß sich unporöse, kugelförmige $SiO_2$-Partikel mit mittleren Teilchendurchmessern zwischen 0,05 und 10 $\mu$m bei einer Standardabweichung von nicht mehr als 5 % erhalten lassen, wenn man zunächst in bekannter Weise durch hydrolytische Polykondensation von Tetraalkoxysilanen in wäßrig-alkoholisch-ammoniakalischem Medium ein Sol von Primärteilchen erzeugt und anschließend durch ein kontinuierliches, nach Maßgabe des Abreagierens kontrolliertes Zudosieren von Tetraalkoxysilan die erhaltenen $SiO_2$-Partikel auf die gewünschte Größe bringt. Hierbei zeigt sich, daß die letztendlich erhaltenen $SiO_2$-Partikel als diskrete Teilchen mit strenger Kugelform und streng einheitlicher

2

Größe, also hoch monodispers, sowie ohne jegliche Porosität anfallen.

Weiterhin gelang es, organisch modifizierte $SiO_2$-Teilchen zu erhalten, die ebenfalls den gesetzten Ansprüchen hinsichtlich Unporosität und Monodispersität entsprechen.

Des weiteren wurde gefunden, daß sich die so hergestellten $SiO_2$-Teilchen aufgrund ihrer spezifischen Eigenschaften gut als spezielle Sorptionsmaterialien in der Chromatographie eignen. So zeigen insbesondere die organisch modifizierten $SiO_2$-Teilchen im Einsatz als Sorptionsmaterial in der Reversed-Phase-Chromatographie von hochmolekularen Biomolekülen, wie beispielsweise Proteinen, Vorteile, die von herkömmlichen, hierbei verwendeten Sorptionsmitteln nicht erreicht werden.

Gegenstand der Erfindung ist somit ein Verfahren zur Herstellung von kugelförmigen $SiO_2$-Partikeln durch hydrolytische Polykondensation von Tetraalkoxysilanen und/oder Organotrialkoxysilanen in wäßrig-alkaoholisch-ammoniakalischem Medium, wobei man zunächst ein Sol von Primärteilchen erzeugt und anschließend derart, daß eine weitere Keimbildung verhindert wird, durch ein kontinuierliches, nach Maßgabe des Abreagierens kontrolliertes Zudosieren von entsprechendem Silan die erhaltenen $SiO_2$-Partikel auf die gewünschte Teilchengröße bringt und hierbei hoch monodisperse, unporöse Partikel mit mittleren Teilchendurchmessern zwischen 0.05 und 10 $\mu$m bei einer Standardabweichung von nicht mehr als 5% erhält.

Gegenstand der Erfindung sind auch Pulver, bestehend aus derartigen $SiO_2$-Partikeln, die aufgrund ihrer Eigenschaften einzigartig sind.

Gegenstand der Erfindung ist darüberhinaus die Verwendung von Pulvern, bestehend aus nach dem erfindungsgemäßen Verfahren hergestellten $SiO_2$-Partikeln als Sorptionsmaterialien in der Chromatographie, insbesondere, im Falle der organisch modifizierten Partikel, in der Reversed-Phase-Chromatographie von hochmolekularen Biomolekülen, wie etwa Proteinen oder Nucleinsäuren.

Das erfindungsgemäße Verfahren zur Herstellung von hoch monodispersen, unporösen kugelförmigen $SiO_2$-Partikel erfolgt in zwei Schritten.

In einem ersten Schritt wird zunächst in Übereinstimmung mit dem bekannten Verfahren ein Sol von Primärteilchen hergestellt. Hierzu wird das Tetraalkoxysilan in ein wäßrig-alkoholisch-ammoniakalisches Hydrolysegemisch gebracht und innig durchmischt. Als geeignete Tetraalkoxysilane können alle problemlos hydrolysierbaren Kieselsäureorthoester aliphatischer Alkohole eingesetzt werden. In erster Linie kommen hierbei die Ester aliphatische Alkohole mit 1-5 C-Atomen in Betracht wie etwa von Methanol, Ethanol, n- oder i-Propanol sowie der isomeren Butanole und Pentanole. Diese können einzeln, aber auch im Gemisch eingesetzt werden. Bevorzugt sind die Kieselsäureorthoester der $C_1$-$C_3$-Alkohole, insbesondere Tetraethoxysilan. Das Hydrolysegemisch sollte neben aliphatischen Alkoholen einen Gehalt von etwa 0,5 bis etwa 8 mol/l Ammoniak und von etwa 1 bis etwa 15 mol/l Wasser enthalten. Als Alkoholkomponente sind geeignet aliphatische $C_1$-$C_5$ Alkohole, bevorzugt $C_1$-$C_3$-Alkohole wie Methanol, Ethanoi sowie n- oder i-Propanol. Diese können einzeln, aber auch im Gemisch miteinander im Hydrolysegemisch vorliegen. Die Zugabe des Tetraalkoxysilans zum Hydrolysegemisch erfolgt vorzugsweise in einer Portion, wobei der Reaktand in reiner Form oder auch in Lösung in einem der genannten Alkohole vorliegen kann. Zur Erzeugung der Primärteilchen kann eine Konzentration von Tetraalkoxysilan im Hydrolysegemisch zwischen etwa 0,01 bis etwa 1 mol/l gewählt werden. Nach dem Zusammenbringen der Reaktanden setzt die Reaktion sofort oder nach wenigen Minuten ein, was sich durch eine alsbaldige Opaleszenz bzw. Trübung des Reaktionsgemisches durch die entstehenden Teilchen zeigt. Nach im allgemeinen nicht mehr als 15-30 Minuten, in ungünstigen Spezialfällen auch länger, ist die Reaktion abgelaufen. Je nach Wahl der Reaktanden sowie ihrer Konzentrationen im Reaktionsgemisch lassen sich in übereinstimmung mit dem bekannten Verfahren Teilchen mit mittlerem Durchmesser zwischen etwa 0,01 und etwa 2 $\mu$m erhalten.

Bevorzugt wird in diesem ersten Schritt des erfindungsgemäßen Verfahrens mit Reaktionsgemischen gearbeitet, die 3-13 mol/l Wasser, 0,5 bis 4,5 mol/l Ammoniak, 10 bis 25 mol/l Alkohol und 0,1-0,5 mol/l Tetraalkoxysilan enthalten. Man erhält hierbei Primärteilchen mit mittleren Durchmessern zwischen 0,01 und 1 $\mu$m. In diesem Stadium können dem Sol von Primärteilchen Proben entnommen werden, um die Teilchen beispielsweise mit Hilfe der Elektronenmikroskopie auf ihre Teilchengröße, Formtreue und Teilchengrößenvertellung zu untersuchen.

Durch Isolation von Teilchenproben besteht die Möglichkeit, die Porosität der Primärteilchen beispielsweise durch Gasadsorptionsmessung zu bestimmen.

Als vorteilhaft hat sich erwiesen, die Reaktion zur Erzeugung der Primärteilchen bei höherer Temperatur durchzuführen. Günstig sind hierbei Temperaturen zwischen 35 und 75 ° C, vorzugsweise zwischen 40 und 65 ° C. Es zeigte sich, daß bei erhöhter Temperatur die Teilchengrößenstreuung abnimmt, allerdings auch die mittlere Teilchengröße. Bei niedrigeren Temperaturen, d.h. um Raumtemperatur, erhält man bei sonst gleichen Bedingungen größere Teilchen mit höherer Größenstreuung. Weiterhin ist hier auch vermehrt unerwünschte Agglomeratbildung zu verzeichnen.

Im zweiten Schritt des erfindungsgemäßen Verfahrens erfolgt bei gleichmäßiger Durchmischung ein langsames, kontinuierliches Zudosieren von weiterem Tetraalkoxysilan zu dem Sol von Primärteilchen. Hierbei ist es wesentlich, daß die Geschwindigkeit des Zudosierens so gesteuert wird, daß ein sofortiges, vollständiges Abreagieren mit den im Sol vorliegenden Teilchen erfolgt, ohne daß ein Überschuß an Tetraalkoxysilan entsteht, aus dem sich Keime für neue Primärteilchen bilden können. Unter dieser Verfahrensmaßnahme des nach Maßgabe des Abreagierens kontrollierten Zudosierens von Tetraalkoxysilan wird ein gesteuertes Nachwachsen der Teilchen im Sol erreicht, wobei sich die letztendlich zu erzielende Teilchengröße nach der Menge des insgesamt zugesetzten Tetraalkoxysilans richtet. Die Menge des insgesamt zuzusetzenden Alkoxysilans ist im Prinzip unkritisch, solange das Hydrolysegemisch im Überschuß vorhanden ist, bzw. durch eventuelles Nachgeben von Hydrolysegemisch im Überschuß gehalten wird. Ein zeitliches Limit bei der Zugabe des Tetraalkoxysilans ist nicht gesetzt; die Zugabe kann sich über Stunden bis Tage erstrecken. Auch Unterbrechungen und Wiederaufnahme des Nachwachsens sind möglich, da die Teilchen in allen Stadien ihres Wachstums stabil sind. Auch im Nachwachsvorgang wird bevorzugt bei erhöhter Temperatur, etwa um 40 °C, gearbeitet.

Als untere Teilchengröße ist etwa 0,05 μm anzusetzen, bedingt durch die Mindestgröße der Primärteilchen. Es zeigt sich, daß die nach dem erfindungsgemäßen Verfahren erhaltenen Teilchen von gleichmäßiger Kugelgestalt sind und keinerlei Porosität aufweisen. Ihre durch Gasadsorptionsmessung bestimmte spezifische Oberfläche ergibt sich als die 1 bis 1,5fache theoretisch errechenbare Oberfläche, was bestenfalls auf eine geringfügige Oberflächenrauhigkeit schließen läßt, das Vorliegen von Poren jedoch ausschließt. Es wird angenommen, daß durch das langsame, kontinuierliche Nachwachsen ursprünglich in den Primärteilchen vorhandene Poren verschlossen werden und neue Poren sich nicht bilden können.

Erstaunlich und völlig unerwartet ist, daß sich die bei den Primärteilchen vorliegende breitere Teilchengrößenstreuung - die Standardabweichungen liegen dort durchschnittlich bei 5-10 % - nicht in den mit dem Nachwachsschritt erhältlichen Teilchen wiederfindet. Die so erhaltenen Teilchen weisen Standardabweichungen von nicht mehr als 5 %, meistens um oder unter 2 % auf, sind also hoch monodispers. Offenbar erfolgt in diesem zweiten Schritt ein Angleich der ursprünglich vorliegenden Teilchen unterschiedlicher Größe und ein gleichmäßiges Weiterwachsen aller vorhandenen Teilchen bei entsprechender Abnahme der relativen Standardabweichung.

Durch das erfindungsgemäße Verfahren können der Fachwelt somit hoch monodisperse, unporöse kugelförmige SiO$_2$ Partikel mit Teilchendurchmessern bis 10 μm bereitgestellt werden. Insbesondere ist es jetzt möglich, in diesem Größenbereich solche Teilchen als Kalibrierungsstandards mit gezielter Größenabstufung, etwa im Sinne einer "Meßlatte", in höchster Präzision zur Verfügung zu stellen.

In einer besonderen Ausführungsform ist es möglich, auch solche Teilchen zu erzeugen, die in der Matrix organisch modifiziert sind, also organische Gruppen kovalent gebunden enthalten. Derartige Verfahren sind prinzipiell bekannt. Hierzu ersetzt man in dem erfindungsgemäßen Verfahren, vorzugsweise im Nachwachsschritt, 0,1 bis 100 %, vorzugsweise 1-30 % des eingesetzten Tetraalkoxysilans durch ein oder mehrere Organotrialkoxysilane, wie sie etwa zur Modifizierung von Kieselgelen bekannt sind. Die Organo-Gruppen in diesen Verbindungen können sein aliphatische Reste mit 1-20 C-Atomen, gegebenenfalls funktionalisiert, etwa durch Hydroxy-, Thio-, Amino-, Carboxyl-Gruppen oder Halogen sowie Alkenylreste. Der Einbau funktionalisierter Organogruppen in die SiO$_2$-Matrix der Teilchen ermöglicht im übrigen eine spätere weitere Modifizierung durch kovalente Bindungsknüpfung in bekannter Weise. Beispiele für derartige Organotrialkoxysilane sind etwa

Methyltriethoxysilan
Ethyltriethoxysilan
Hexyltriethoxysilan
Octyltriethoxysilan
Dodecyltriethoxysilan
Octadecyltriethoxysilan
Vinyltriethoxysilan
3-Hydroxypropyltriethoxysilan
3-Chloropropyltriethoxysilan
3-Aminopropyltriethoxysilan
3-Glycidoxypropyltriethoxysilan
3-Mercaptopropyltriethoxysilan
3-Isothiocyanatopropyltriethoxysilan
3-(Aminoethylamino)-propyltriethoxysila
3-Methacryloxypropyltriethoxysilan
3-Acetoxypropyltriethoxysilan

4

N-(3-Triethoxysilylpropyl)-N'-(1-phenyl-1-hydroxyisopropyl)-thioharnstoff
N-(3-Triethoxysilylpropyl)-N'-( $\alpha$-Phenylethyl)-thioharnstoff

Durch eine derartige organische Modifizierung werden die Eigenschaften der Teilchen hinsichtlich Unporosität und Monodispersität nicht beeinflußt, während im übrigen die bekannten, vorteilhaften Eigenschaften modifizierter Kieselgele wahrgenommen werden können. Selbstverständlich können auch nach dem erfindungsgemäßen Verfahren hergestellte, nicht modifizierte SiO$_2$-Partikel durch nachträgliche Behandlung nach Verfahren, wie sie für poröse Materialien (z.B. bei der Herstellung von Reversed-Phase-Chromatographie-Sorbentien) bekannt sind, oberflächlich organisch modifiziert werden.

Derartig organisch modifizierte SiO$_2$-Partikel ermöglichen Anwendungen auf zahlreichen anderen Gebieten, beispielsweise als maßgeschneiderte Sorbentien für die Chromatographie.

Insbesondere eignen sich diese, nach dem erfindungsgemäßen Verfahren hergestellten, organisch modifizierten SiO$_2$-Partikel für die Verwendung in der Reversed-Phase-Chromatographie.

Der Einsatz dieser Teilchen erlaubt die Trennung von hochmolekularen Biomolekülen, wie etwa Peptiden, Proteinen oder Nucleinsäuren. Solche Moleküle sind z.B. Lysozym, Ribonuclease A, Urease, Transferrin, Insulin, Aldolase, Myoglobin, Katalase, Ovalbumin, LDH, PAP, $\alpha$-Chymotrypsin, Peroxidase, Rinderserumalbumin, Ferritin, C$_1$-INA, Kreatin- Kinase, Carboanhydrase, Amylglucosidase, Hämoglobin, Interleukin u.a. Bei Verwendung der erfindungsgemäßen Teilchen für die Trennung solcher Biomoleküle ergeben sich Vorteile, die von herkömmlichen, hierbei verwendeten Materialien bisher nicht erreicht werden konnten.

Die kleine mittlere Teilchengröße, die sehr enge Teilchengrößeverteilung sowie die gegenüber dem porösen Materialien fehlende Diffusionsbarriere erzielen eine wesentlich höhere Effizienz der Säulen und damit auch eine höhere Nachweisgrenze. Weitere Vorteile liegen in den wesentlich kürzeren Analysenzeiten, die ungefähr um den Faktor 5 kürzer sind im Vergleich zu den Zeiten, die bei den herkömmlichen Materialien benötigt werden. Ferner sind die Substanzverluste wesentlich geringer als bei Verwendung von porösen Materialien.

Für die Wahl des Lösungsmittels gibt es keinerlei Beschränkungen. Alle bekannten Lösungsmittelsysteme können eingesetzt werden.

Beispiel 1

Es wird ein Hydrolysegemisch bereitet, bestehend aus 11,9 g (0,66 mol) Wasser, 62,7 g (1,96 mol) Methanol und 2 g (0,12 mol) Ammoniak. Zu diesem auf 40 °C temperierten Hydrolysegemisch gibt man bei intensiver Durchmischung in einer Portion 4,4 g (0,02 mol) von gleichermaßen temperiertem Tetraethoxysilan. Man erhält ein Sol von Primärteilchen mit mittleren Teilchendurchmessern von 0,07 $\mu$m bei einer Standardabweichung von 11 %.

Zu dem so erhaltenen Primärteilchensol tropft man unter Rühren über eine Zeit von 24 h 36 g (0,17 mol) Tetraethoxysilan und 450 g Hydrolysegemisch obiger Zusammensetzung. Man erhält (nach Zentrifugation bzw. Sedimentation und Trocknung) kugelförmige SiO$_2$-Partikel mit mittleren Teilchendurchmessern von 0,145 $\mu$m bei einer Standardabweichung von 5 %. Die spezifische Oberfläche nach BET beträgt 23 m$^2$/g (theoretisch berechnete Oberfläche: 19 m$^2$/g).

Beispiel 2

Es wird ein Hydrolysegemisch bereitet, bestehend aus 13,5 g (0,75 mol) Wasser, 80 g (2,5 mol) Methanol und 0,85 g (0,05 mol) Ammoniak. Zu diesem auf 40 °C temperierten Hydrolysegemisch gibt man bei intensiver Durchmischung in einer Portion 4,2 g (0,02 mol) von gleichermaßen temperiertem Tetraethoxysilan. Man erhält ein Sol von Primärteilchen mit mittleren Teilchendurchmessern von 0,015 $\mu$m bei einer Standardabweichung von 15 %.

Zu dem so erhaltenen Primärteilchensol tropft man unter Rühren über eine Zeit von l00 h 170 g (0,82 mol) Tetraethoxysilan und 1,9 1 Hydrolysegemisch. Man erhält kugelförmige SiO$_2$-Partikel mit mittleren Teilchendurchmessern von 0,05 $\mu$m bei einer Standardabweichung von 5 %. Die spezifische Oberfläche nach BET beträgt 64 m$^2$/g (theoretisch berechnete Oberfläche: 55 m$^2$/g).

Beispiel 3

Es wird ein Hydrolysegemisch bereitet, bestehend aus 13,5 g (0,75 mol) Wasser, 64,4 g (14 mol) Ethanol und 6,4 g (0,38 mol) Ammoniak. Zu diesem auf 40 °C temperierten Hydrolysegemisch gibt man bei intensiver Durchmischung in einer Portion 4,2 g (0,02 mol) von gleichermaßen temperiertem Tetraethoxysilan. Man erhält ein Sol von Primärteilchen mit mittleren Teilchendurchmessern von 0,58 $\mu$m bei einer Standardabweichung von 5 %. Spezifische Oberfläche: $S_{BET}$ = 340 m²/g; $S_{theor.}$ = 4,7 m²/g.

Zu dem so erhaltenen Primärteilchensol tropft man unter Rühren über eine Zeit von 5 Tagen 650 g (3,1 mol) Tetraethoxysilan und 5,9 1 Hydrolysegemisch. Man erhält kugelförmige $SiO_2$-Partikel mit mittleren Teilchendurchmessern von 3,1 $\mu$m bei einer Standardabweichung von 1,3 %. Die spezifische Oberfläche nach BET beträgt 1,1 m²/g (theoretisch berechnete Oberfläche: 0,88 m²/g).

Beispiel 4

Man bereitet ein Primärteilchensol wie in Beispiel 1. Der Nachwachsschritt erfolgt in analoger Weise, jedoch mit einem Gemisch aus 4 g (0,019 mol) Tetraethoxysilan und 0,4 g (1,8 mmol) 3-Aminopropyltriethoxysilan.

Man erhält organisch modifizierte kugelförmige $SiO_2$-Partikel mit mittlerem Teilchendurchmesser 0,09 $\mu$m bei einer Standardabweichung von 5 %. Die spezifische Oberfläche beträgt 44 m²/g (theoretisch berechnete Oberfläche: 30 m²/g). Der Kohlenstoffanteil dieser Teilchen beträgt 2,4 %.

Beispiele 5 bis 8

Es wird ein Hydrolysegemisch bereitet, bestehend aus 16,2 g (0,9 mol) Wasser, 64,8 g (1,8 mol) Methanol und 2,7 g (0,16 mol) Ammoniak. Zu diesem auf 40 °C temperierten Hydrolysegemisch gibt man bei intensiver Durchmischung in einer Portion 4,2 g (0,02 mol) von gleichermaßen temperiertem Tetraethoxysilan. Man erhält ein Sol von Primärteilchen mit mittleren Teilchendurchmessern von 0,13 $\mu$m bei einer Standardabweichung von 10 %. Spezifische Oberfläche: $S_{BET}$ = 280 m²/g; $S_{theor.}$ = 4,7 m²/g.

Das Nachwachsen erfolgt stufenweise, wobei zu jeweils 100 ml des vorliegenden Sols innerhalb von 2 Tagen eine bestimmte Menge an Tetraethoxysilan sowie Hydrolysegemisch bis zum Erreichen einer Gesamtmenge von 600 ml getropft werden. Die nachfolgende Tabelle 1 zeigt die in den jeweiligen Stufen zugesetzte Silanmenge sowie die Daten der erhaltenen Teilchen.

Tabelle 1

| Beispiel Nr. | zugesetzte Menge Tetraethoxysilan | mittl. Teilchendurchmesser/ Standardabweichung | spez. Oberfläche | |
|---|---|---|---|---|
| | | | $S_{BET}$ | $S_{theor.}$ |
| 5 | 35 g | 0,265 $\mu$m/5 % | 14 m²/g | 10,3 m²/g |
| 6 | 54 g | 0,56 $\mu$m/3,4 % | 5,5 m²/g | 4,9 m²/g |
| 7 | 55,3 g | 1,15 $\mu$m/2,6 % | 2,6 m²/g | 2,4 m²/g |
| 8 | 55,3 g | 2,4 $\mu$m/1,7 % | 1,5 m²/g | 1,1 m²/g |

Beispiel 9

In 3 Litern eines Hydrolysegemisches, bestehend aus 1 Mol Ammoniak/l, 8 Mol Wasser/l und Ethanol (Restmenge), werden 170 g Kieselgelteilchen, hergestellt nach Beispiel 3, mit einem Teilchendurchmesser von 1,55 $\mu$m vorgelegt und auf 40 °C temperiert. Zu dieser Lösung wird über einen Zeitraum von 1,5-2 Stunden eine Mischung aus 2,4 g Octyltrimethoxysilan und 17,6 g Tetraethoxysilan zugetropft. Man erhält organisch modifizierte, kugelförmige $SiO_2$-Partikel. Der Kohlenstoffanteil dieser Teilchen beträgt 1,0 %.

Beispiel A

Ein Gemisch aus 5 Proteinen wird über eine Säule (Länge 40 cm, Durchmesser 8 cm), gefüllt mit unporösen, monodispersen 1,5 $\mu$m octylmodifizierten $SiO_2$-Teilchen, hergestellt nach Beispiel 9, aufgetrennt.

Das Proteingemisch besteht aus:
1) Ribonuclease A (MW = 13700)
2) Cytochrom C (MW = 12500)
3) Aldolase (MW = 156000)

4) Katalase (MW = 24000)

5) Ovalbumin (MW = 45000)

Als Lösungsmittel werden verwendet:

Lösungsmittel A:     100 % Wasser, mit $HClO_4$ auf pH 2,0 eingestellt

Lösungsmittel B:     75 % Acetonitril/25 % Lösungsmittel A

Die Trennung wird mit einer Flußrate von 1,5 ml/min durchgeführt.

Gradientenverlauf:

Die Startbedingungen sind jeweils 75 % Lösungsmittel A; nach 3, 10, 20 und 40 Minuten wird der Endwert von 100 % Lösungsmittel B erreicht.

Einen Vergleich der Elutionspositionen der einzelnen Proteine gibt Tabelle 2.

Tab. 2

| Protein | $t_G$ (min) | | | |
|---|---|---|---|---|
| | 3 | 10 | 20 | 40 |
| Ribonuclease A | 3,2 | 4,2 | 5,4 | 7,9 $t_e$ (min) |
| Cytochrom C | 3,6 | 5,8 | 7,6 | 12,1 |
| Aldolase | 4,2 | 7,1 | 10,8 | 18,8 |
| Katalase | 4,5 | 7,6 | 11,9 | 20,7 |
| Ovalbumin | 4,8 | 8,2 | 13,2 | 23,9 |
| $t_G$ = Gradientendauer in Minuten | | | | |
| $t_e$ = Elutionszeit einer Substanz in Minuten | | | | |

Die Tabelle zeigt, daß schon bei einer Analysenzeit von nur 10 Minuten eine ausreichend gute Trennung zu erhalten ist, da hier die Elutionspositionen schon genügend weit auseinander liegen.

**Patentansprüche**

1. Verfahren zur Herstellung von kugelförmigen $SiO_2$-Partikeln durch hydrolytische Polykondensation von Tetraalkoxysilanen und/oder Organotrialkoxysilanen in wäßrig-alkoholisch-ammoniakalischem Medium, dadurch gekennzeichnet, daß man zunächst ein Sol von Primärteilchen erzeugt und anschließend derart, daß eine weitere Keimbildung verhindert wird, durch ein kontiniuierliches, nach Maßnahme des Abreagierens kontrolliertes Zudosieren von entsprechendem Silan die erhaltenen $SiO_2$-Partikel auf die gewünschte Teilchengröße bringt, wobei man hoch monodisperse, unporöse Partikel mit mittleren Teilchendurchmessern zwischen 0,05 und 10 $\mu$m bei einer Standardabweichung von nicht mehr als 5% erhält.

2. Verfahren nach Anspruch 1, dadurch gekennzeichnet, das die hydrolytische Polykondensation bei Temperaturen zwischen 35 und 75 $^\circ$C, vorzugsweise zwischen 40 und 65 $^\circ$C, durchgeführt wird.

3. Verfahren nach Anspruch 1, dadurch gekennzeichnet, daß als einzusetzende Tetraalkoxysilane Kieselsäureester niedriger aliphatischer Alkohole ($C_1$ - $C_3$) verwendet werden.

4. Verfahren nach Anspruch 1, dadurch gekennzeichnet, daß Tetraethoxysilan verwendet wird.

5. Verfahren nach Anspruch 1, dadurch gekennzeichnet, daß 0,1 - 100 %, vorZugsweise 1 - 30 % des einzusetzenden Tetraalkoxysilans durch Organo-trialkoxysilan ersetzt werden.

6. Pulver, bestehend aus kugelförmigen $SiO_2$-Partikeln, dadurch gekennzeichnet, daß die Partikel in hoch monodisperser Form mit einem mittleren Teilchendurchmesser zwischen 0.05 und 10 $\mu$m bei einer Standardabweichung von nicht mehr als 5% vorliegen und eine Porosität aufweisen, die einer spezifischen Oberfläche des 1 bis 1,5 fachen theoretischen Wertes entspricht.

7. Pulver nach Anspruch 6, dadurch gekennzeichnet, daß die Partikel in der Matrix kovalent gebundene organische Gruppen aufweisen, die normalerweise zur Modifizierung von Kieselgelen dienen.

**8.** Verwendung von Pulvern, bestehend aus SiO$_2$-Partikeln, hergestellt nach Anspruch 1, als Sorptionsmaterial in der Chromatographie.

**9.** Verwendung von Pulvern nach Anspruch 7 als Sorptionsmaterial in der Reversed-Phase-Chromatographie von hochmolekularen Biomolekülen, insbesondere Proteinen.

**10.** Verwendung von Pulvern, bestehend aus SiO$_2$-Partikeln, hergestellt nach Anspruch 1, als Sorptionsmaterial in der Reversed-Phase-Chromatographie von hochmolekularen Biomolekülen, insbesondere Proteinen.

**Claims**

**1.** Method for the preparation of spherical SiO$_2$ particles by hydrolytic polycondensation of tetraalkoxysilanesand/or organotrialkoxysilanes in aqueous/alcoholic ammoniacal medium, characterized in that a sol of primary particles is first produced and the SiO$_2$ particles obtained are then converted, in a manner such that further formation of nuclei is prevented, to the desired particle size by a continuous measured addition of corresponding silane controlled by the extent of the reaction, highly monodisperse nonporous particles with mean particle diameters of between 0.05 and 10 $\mu$m being obtained with a standard deviation of not more than 5%.

**2.** Method according to Claim 1, characterized in that the hydrolytic polycondensation is performed at temperatures between 35 and 75$^\circ$C, preferably between 40 and 65$^\circ$C.

**3.** Method according to Claim 1, characterized in that silicate esters or low aliphatic alcohols (C$_1$-C$_3$) are used as the tetraalkoxysilanes to be employed.

**4.** Method according to Claim 1, characterized in that tetraethoxysilane is used.

**5.** Method according to Claim 1, characterized in that 0.1 - 100%, preferably 1 - 30%, of the tetraalkoxysilane to be used are replaced by organotrialkoxysilane.

**6.** Powder consisting of spherical SiO$_2$ particles, characterized in that the particles are present in a highly monodisperse form and have a mean particle diameter of between 0.05 and 10 $\mu$m with a standard deviation of not more than 5% and have a porosity which corresponds to a specific surface of 1 to 1.5 times the theoretical value.

**7.** Powder according to Claim 6, characterized in that the particles have in the matrix covalently bonded organic groups which are normally used to modify silica gels.

**8.** Use of powders consisting of SiO$_2$ particles prepared according to Claim 1 as sorption material in chromatography.

**9.** Use of powders according to Claim 7 as sorption material in the reversed-phase chromatography of biological molecules of high molecular weight, in particular proteins.

**10.** Use of powders consisting of SiO$_2$ particles prepared according to Claim 1 as sorption material in the reversed-phase chromatography of biological molecules of high molecular weight, in particular proteins.

**Revendications**

**1.** Procédé de préparation de particules sphériques de SiO$_2$ par polycondensation hydrolytique de tétraalcoxysilanes et/ou d'organotrialcoxysilanes en milieu aqueux-alcoolique-ammoniacal, caractérisé en ce que l'on forme d'abord un sol de particules primaires puis, en évitant une nouvelle formation de germes, on porte les particules de SiO$_2$ ainsi obtenues à la dimension voulue par une addition continue, contrôlée en fonction des progrès de la réaction, du silane correspondant, ce qui donne des particules non poreuses, à l'état de haute monodispersion, à des diamètres de particules moyen de 0,05 à 10 $\mu$m avec un écart-type ne dépassant pas 5 %.

2. Procédé selon la revendication 1, caractérisé en ce que la polycondensation hydrolytique est effectuée à des températures de 35 à 73°C, de préférence de 40 à 65°C.

3. Procédé selon la revendication 1, caractérisé en ce que les tétraalcoxysilanes utilisés sont des esters siliciques d'alcools aliphatiques inférieurs (en C 1-C 3).

4. Procédé selon la revendication 1, caractérisé en ce que l'on utilise du tétraéthoxysilane.

5. Procédé selon la revendication 1, caractérisé en ce que l'on remplace de 0,1 à 100 %, de préférence de 1 à 30 % du tétraalcoxysilane utilisé par un organotrialcoxysilane.

6. Poudre consistant en particules sphériques de $SiO_2$, caractérisée en ce que les particules sont à l'état de haute monodispersion, à un diamètre de particule moyen de 0,05 à 10 $\mu$m avec un écart-type ne dépassant pas 5 %, et ont une porosité correspondant à une surface spécifique représentant de 1 à 1,5 fois la valeur théorique.

7. Poudre selon la revendication 6, caractérisée en ce que les particules contiennent dans la gangue des groupes organiques fixés par des liaisons covalentes, du type servant normalement à la modification des gels de silice.

8. Utilisation de poudres consistant en particules de $SiO_2$, préparées selon revendication 1, en tant que matières sorbantes en chromatographie.

9. Utilisation de poudres selon revendication 7, en tant que matières sorbantes dans la chromatographie en phase inversée de biomolécules à haut poids molécutaire, en particulier de protéines.

10. Utilisation de poudres consistant en particules de $SiO_2$ préparées selon revendication 1, en tant que matières sorbantes dans la chromatographie en phase inversée de biomolécules à haut poids moléculaire, en particulier de protéines.